(19) 
**Europäisches Patentamt**
**European Patent Office**
**Office européen des brevets**

(11) **EP 1 675 041 B1**

(12) **EUROPÄISCHE PATENTSCHRIFT**

(45) Veröffentlichungstag und Bekanntmachung des Hinweises auf die Patenterteilung:
**07.10.2009   Patentblatt 2009/41**

(51) Int Cl.:
***G06K 19/07*** *(2006.01)*

(21) Anmeldenummer: **05027279.8**

(22) Anmeldetag: **14.12.2005**

(54) **Backscatter transponder**

Backscatter transponder

Répondeur par rétrodiffusion

(84) Benannte Vertragsstaaten:
**DE FR**

(30) Priorität: **23.12.2004   DE 102004062132**

(43) Veröffentlichungstag der Anmeldung:
**28.06.2006   Patentblatt 2006/26**

(73) Patentinhaber: **Atmel Automotive GmbH**
**74072 Heilbronn (DE)**

(72) Erfinder: **Ulrich, Friedrich**
**74248 Ellhofen (DE)**

(74) Vertreter: **Müller, Wolf-Christian et al**
**Koch Müller**
**Patentanwaltsgesellschaft mbH**
**Maaßstrasse 32/1**
**69123 Heidelberg (DE)**

(56) Entgegenhaltungen:
**US-B1- 6 412 086        US-B1- 6 486 769**

EP 1 675 041 B1

**Beschreibung**

Die Erfindung betrifft einen Backscatter-Transponder für ein HF-Kommunikationssystem mit modulierter Rückstrahlung.

Die Erfindung liegt auf dem Gebiet der Transpondertechnologie und insbesondere im Bereich der kontaktlosen Kommunikation zum Zwecke der Identifikation. Wenngleich prinzipiell auf beliebige Kommunikationssysteme anwendbar, werden die vorliegende Erfindung sowie die ihr zugrunde liegende Problematik nachfolgend in Bezug auf so genannte RFID-Kommunikationssysteme und deren Anwendungen erläutert. RFID steht dabei für "Radio Frequency Identification". Zum allgemeinen Hintergrund dieser RFID-Technologie wird auf das "RFID-Handbuch" von Klaus Finkenzeller, Hanser Verlag, dritte aktualisierte Auflage, 2002 verwiesen.

Bei RFID-Systemen wird typischerweise ein von einer Basisstation (Reader) ausgesendetes elektromagnetisches Signal von dem Transponder (Tag) aufgenommen und demoduliert. Man unterscheidet hier aktive, semipassive und passive Transponder, je nach dem wie deren Energieversorgung ausgebildet ist. Im Unterschied zu aktiven Transpondern weisen passive Transponder keine eigene Energieversorgung auf, so dass die im Transponder für die Demodulation und Dekodierung des empfangenen elektromagnetischen Signals benötigte Energie aus eben diesem, von der Basisstation gesendeten elektromagnetischen Signal selbst entnommen werden muss. Neben dieser unidirektionalen Energieübertragung erfolgt typischerweise auch eine bidirektionale Datenkommunikation zwischen Basisstation und Transponder.

In den meisten UHF und Mikrowellen basierenden RFID-Systemen bzw. Sensorsystemen wird die bidirektionale Datenkommunikation zwischen Basisstation und Transponder zunächst von der Basisstation eingeleitet, indem von der Basisstation ein Anfragesignal (Kommando, data request) zu den verschiedenen, sich in der Umgebung der Basisstation befindlichen Transpondern gesendet wird. Der oder die an der Datenkommunikation teilnehmenden Transponder reagieren auf diese Anfrage typischerweise mit einem Antwortsignal (response).

Für die Datenrückübertragung von dem Transponder zurück zu der Basisstation wird unter anderem die so genannte Backscatter- oder Rückstreutechnik eingesetzt. Solche Transponder werden nachfolgend auch als Back-scatter-Transponder bezeichnet. Bei diesem Verfahren werden zunächst von der Basisstation hochfrequente elektromagnetische Trägersignale emittiert, die von der Sende- und Empfangseinrichtung des Transponders aufgenommen und verarbeitet werden. Darüber hinaus werden die empfangenen Signale mit einem gängigen Modulationsverfahren moduliert und unter Verwendung des Rückstreuquerschnitts der Sende/Empfangsantenne des Transponders wieder zurück gestreut.

Das Europäische Patent EP 750 200 B1 beschreibt ein bekanntes RFID-Kommunikationssystem, bei dem die Datenrückübertragung unter Verwendung des Backscatter-Verfahrens erfolgt. Die Basisstation überträgt hier eine erste Information an zumindest einen Transponder des Kommunikationssystems, die das von der Basisstation gesendete Signal aufnehmen, es dekodieren und daraus die erste Information entnehmen. Die Transponder weisen ferner einen Backscatter-Modulator auf. Der Backscatter-Modulator moduliert das rückgestreute Signal, welches von dem von der Basisstation gesendeten Signal abgeleitet ist. Bei dieser Modulation wird eine zweite Information, die aus der ersten Information des gesendeten Signals abgeleitet ist, verwendet. Der Inhalt der zweiten Information enthält zum Beispiel die Datenrate oder die verwendete Modulation im vom Transponder rückgestreuten Signal.

Mitunter besteht bei solchen Transpondern der Bedarf an einer schnellen und möglichst effektiven Testmöglichkeit, um dadurch einen oder mehrere Transponder spezifische Parameter, die Aufschluss über die Qualität, Leistungsfähigkeit, Funktionsfähigkeit, etc. des Transponders geben können, zu ermitteln. Ein sehr wesentlicher Transponder spezifischer Parameter, der einerseits Aufschluss über den Transponder selbst, aber auch über das gesamte RFID-System gibt, ist die Effektivität des transponderseitigen Gleichrichters. Die Effektivität des Gleichrichters bezeichnet in erster Näherung das Verhältnis zwischen dem vom Transponder aufgenommenen Nutzsignal zu dem von der Basisstation gesendeten Sendesignal. Da man dadurch typischerweise nur eine Angabe über die Verluste auf dem Übertragungsweg der elektromagnetischen Welle erhält, muss für die Ermittlung der tatsächlichen Gleichrichtereffektivität selbstverständlich auch die DC-Leistung am Ausgang des Gleichrichters ins Verhältnis mit dem aufgenommenen Nutzsignal gesetzt werden.

Weist der Transponder bzw. der Gleichrichter empfangsseitig sehr viele parasitäre Komponenten auf, dann sinkt die Effektivität des Gleichrichters. Für die Beurteilung der Qualität und der Leistungsfähigkeit eines jeweiligen Transponders ist es wichtig, eben diesen Transponder spezifischen Parameter möglichst genau bestimmen zu können.

Weitere Transponder spezifische Parameter sind der Modulationshub des Modulators, der abhängig ist von der von dem Transponder aus dem elektromagnetischen Feld extrahierten Spannung und der das Backscatter-Verhalten wesentlich beeinflusst, die aus dem externen elektromagnetischen Feld extrahierte Spannung selbst, die Empfangsqualität und dergleichen.

Will man diese Transponder spezifischen Parameter eines UHF oder mikrowellenbasierten RFID-Systems ermitteln, so kann das auf mehrere Arten erfolgen.

Die Transponder spezifischen Parameter können zum Beispiel statisch ermittelt werden. Dabei wird der oder die jeweils gewünschten Transponder spezifischen Parameter vom Transponder selbst gemessen und ausgewertet. Die ausgewerteten Parameter werden dann in ein Transponder internes Register oder Speicher geschrieben. Im Anschluss an das Testen können die gespeicherten Transponder spezifischen Parameter durch eine externe Ausleseeinrichtung wieder ausgelesen werden. Dieses Verfahren ist allerdings außerordentlich aufwändig, da ein eigens dafür vorgesehener Testtransponder bereitgestellt werden muss, der über eine entsprechende Auswerte- und Speichereinrichtung verfügt. Da insbesondere die üblicherweise verwendeten passiven und semipassiven Transponder allein schon aus Kostengründen nicht über Transponder interne, eigens zum Testen vorgesehene Testeinrichtungen verfügen, würden so ausgestattete Transponder schaltungstechnisch aufwändig und damit kostenintensiv. Darüber hinaus wäre mit dieser Art des Transpondertests lediglich ein statischer Test möglich, da die ermittelten Daten erst im Anschluss an den Testvorgang ausgelesen und ausgewertet werden könnten. Eine dynamische Testmöglichkeit im sich verändernden elektromagnetischen Feld ist hier nicht möglich.

Neben dem eben genannten statischen Test existiert auch die Möglichkeit, die Transponder spezifischen Parameter dynamisch, das heißt während des Betriebs eines Transponders zu ermitteln. Bei dem dynamischen Test werden drahtgebundene Messeinrichtungen an Anschlüssen des Backscatter-Transponders angeklemmt. Die angeklemmten Verbindungsleitungen wirken allerdings als Antenne, welche ebenfalls dazu beitragen, einen Teil des von der Basisstation gesendeten elektromagnetischen Feldes zurückstreuen. Ist die Leistung des von der Basisstation abgestrahlten elektromagnetischen Signals, wie bei passiven Transpondern, relativ groß, so sind über die als Antennen fungierenden Verbindungsleitungen mit entsprechenden Rückwirkungen auf den Schaltkreis der Auswerteschaltung zu rechnen. Dies führt typischerweise zu mehr oder weniger stark veränderten und damit verfälschten Messergebnissen. Dieser dynamische Test im elektromagnetischen Feld des Transpondersystems ist daher wenig aussagekräftig.

Patentschrift US-B-6,412,086 beschreibt einen Transponder (RFID) mit einer "on-chip" Testmöglichkeit zur Funktionsüberprüfung eines Transponders gerade nach seiner Herstellung unter Verwendung von Testkontaktstellen.

Bei derzeitigen Backscatter basierenden Transpondersystemen bestehen daher keine einfachen Möglichkeiten zur aussagekräftigen Bestimmung der oben genannten Transponder spezifischen Parameter im UHF oder Mikrowellenfeld. Es existieren lediglich minimale Tests, bei denen vom Transponder auf ein von der Basisstation gesendetes Anfragesignal hin Daten zurück zur Basisstation übertragen werden, die dann aber lediglich eine Aussage darüber geben, ob der Modulator des Transponders an oder aus ist. Eine Überprüfung der Leistungsfähigkeit des Transponders, der Effektivität dessen Empfangseinrichtung und dergleichen ist aber nicht möglich.

Vor diesem Hintergrund liegt der vorliegenden Erfindung nun die Aufgabe zugrunde, eine bessere und insbesondere zuverlässigere Testmöglichkeit Transponder spezifischer Parameter anzugeben.

Erfindungsgemäß wird diese Aufgabe durch einen Transponder mit den Merkmalen des Patentanspruchs 1.

Die der vorliegenden Erfindung zu Grunde liegende Erkenntnis besteht darin, dass der ohnehin im Backscatter-Transponder vorhandene Modulator nicht nur für die Datenrückübertragung vom Transponder zur Basisstation genutzt werden kann, sondern auch in einem Testbetrieb zur Übertragung Transponderspezifischer Parameter. Bei diesen Transponder-spezifischen Parameter, auf die nachfolgend noch ausführlich eingegangen wird, handelt es sich um Statusgrößen, Testgrößen und dgl., die die Funktion des Transponders sowie die Datenkommunikation des Transponders mit der Basisstation charakterisieren.

Der Transponder, genauer gesagt dessen Modulator, weist also einen ersten Betriebsmodus auf, bei dem auf an sich bekannte Weise die Datenkommunikation zwischen Basisstation und Transponder erfolgt, bei dem also im Halb- oder Vollduplexmodus Daten von der Basisstation an den Transponder gesendet werden und entsprechende Antwortsignale vom Transponder zurück zur Basisstation gesendet werden. Dieser erste Betriebsmodus ist allerdings nicht Gegenstand der vorliegenden Erfindung, sodass in der vorliegenden Patentanmeldung darauf nicht näher eingegangen ist. Zusätzlich zu diesem ersten Betriebsmodus ist der erfindungsgemäße Transponder auch in einem zweiten, so genannten Testbetriebsmodus betreibbar. In diesem Testbetriebsmodus ermittelt der Transponder die genannten Transponder-spezifischen Parameter, wertet diese gegebenenfalls aus und sendet entsprechende Signale zurück an die Basisstation, wobei die Auswertung dieser zurückgesendeten Signale in der Basisstation Rückschlüsse auf die Transponder-spezifischen Parameter zulässt.

Wesentlich dabei ist, dass der Transponder als so genannter Backscatter-Transponder ausgebildet ist, bei dem vom Transponder unter Ausnutzung des Rückstreuquerschnittes dessen Sende-/Empfangsantennen Signale zurück zur Basisstation gesendet werden können, sofern der Transponder sich in einem elektromagnetischen Feld befindet. Wesentlich ist ferner, dass der Transponder zur Ermittlung der Transponder-spezifischen Parameter eine Sensoreinrichtung aufweist, die die Transponder-spezifischen Parameter ermittelt und an eine Steuereinrichtung weitergibt. Die Steuereinrichtung steuert im Testbetrieb den Modulator derart an, dass nach Maßgabe eines aus mindestens einem Transponder-spezifischen Parameter abgeleiteten Steuersignals die Reflexionseigenschaften verändert werden. Der besondere Vorteil der erfindungsgemäßen Lösung besteht darin, dass auf diese sehr einfache und elegante Weise die von der Sensoreinrichtung ermittelten Transponder-spezifischen Parameter zur Basisstation gesendet werden, ohne dass diese Signale durch irgendwelche zusätzlichen Testantennen oder Testeinrichtungen und/oder durch eine unerwünschte Reflexion verfälscht würden. Die Basisstation ist daher in der Lage, die von dem Transponder im Testbetrieb gesendeten Signale auszuwerten und daraus mit sehr hoher Sicherheit Rückschlüsse auf die jeweiligen Transponder-spezifischen Parameter zu ziehen.

Vorteilhafte Ausgestaltungen und Weiterbildungen der Erfindung sind in den Unteransprüchen sowie in der Beschreibung unter Bezugnahme auf die Zeichnung entnehmbar.

In einer sehr vorteilhaften Weiterbildung der vorliegenden Erfindung weist die Steuereinrichtung einen Oszillator mit Frequenzsteuerung auf. Dem Oszillator ist als Steuergröße zur Einstellung der Oszillatorfrequenz ein einen Transponder spezifischen Parameter charakterisierendes Spannungssignal zuführbar. Es ergibt sich somit eine sehr einfache und zudem sehr elegante Lösung zur Übertragung der ermittelten Transponder spezifischen Parameter zu der Basisstation, indem diese analog bzw. digital vorliegenden Parameter als Steuergröße für die Frequenzeinstellung des Oszillators verwendet werden. Der Oszillator wandelt diese analog bzw. digital vorliegenden Transponder spezifischen Parameter in eine entsprechend dem jeweiligen Parameterwert spezifische Frequenz um. Der Oszillator steuert mit diesem Frequenzsignal den Modulator an, wobei abhängig von dem dem Modulator zugeführten Frequenzsignal die Reflexionseigenschaften der Antenne geändert werden. Die Basisstation wertet die Seitenbänder (Hilfsträger) der von den Antennen des Transponders rückgesteuerten Signals aus und kann aus der spektralen Lage der Seitenbänder auf die Frequenz des Oszillatorsignals und damit auf die Transponder spezifischen Parameter schließen.

Besonders vorteilhaft ist es in diesem Zusammenhang, wenn der Oszillator als spannungsgesteuerter (VCO) oder stromgesteuerter (ICO) Oszillator ausgebildet ist. Bei dieser Oszillatorart kann als analoge Steuergröße ein Spannungssignal bzw. ein Stromsignal, welches direkt aus dem jeweiligen Transponder spezifischen Parameter abgeleitet ist, verwendet werden.

Ein Transponder spezifischer Parameter, dessen genaue Kenntnis besonders wichtig ist, ist die von dem Transponder aus dem elektromagnetischen, hochfrequenten Feld extrahierte Versorgungsspannung. Aus der Kenntnis der extrahierte Versorgungsspannung lassen sich Rückschlüsse über die Effektivität des empfangsseitigen Gleichrichters des Transponders ziehen. Dieser Gleichrichter kann ein- oder mehrstufig ausgebildet sein. Die aus dem elektromagnetischen Feld extrahierte Versorgungsspannung ist dabei ein Maß für die Effektivität des in der Sende/Empfangseinrichtung des Transponders befindlichen Gleichrichters. Die Effektivität des Gleichrichters bemisst sich aus dem Verhältnis aus empfangenen Nutzsignal zu dem von der Basisstation gesendeten Signal. Typischerweise sendet die Basisstation mit einigen Watt Ausgangsleistung. Je höher die extrahierte Spannung ist, desto höher ist die Effektivität des Gleichrichters bei gleichen Entfernungen des Transponders zur Basisstation. Eine vergleichsweise niedrige Effektivität ergibt sich beispielsweise dann, wenn die Sende/Empfangseinrichtung bzw. der darin enthaltene Gleichrichter eine Vielzahl von parasitären Elementen aufweist.

Neben der Kenntnis der extrahierten Versorgungsspannung spielen auch noch weitere Transponder spezifischen Parameter, wie zum Beispiel die Bandgap-Spannung, die RSSI-Ausgangsspannung und dergleichen eine Rolle. Die Bandgap-Spannung ist sehr konstant und kann daher als Vergleichs- und/oder Referenzgröße verwendet werden.

Der Transponder weist für die Energieversorgung des Transponders eine Energieversorgungseinrichtung auf, die aus dem von der Antenne aufgenommenen elektromagnetischen Trägersignal eine Versorgungsspannung erzeugt. Diese Versorgungsspannung kann als stabilisierte Versorgungsspannung und/oder als gleichgerichtete Versorgungsspannung vorliegen. Zur Ermittlung der aus dem elektromagnetischen Feld extrahierten Versorgungsspannung wird nun diese, von der Energieversorgungseinrichtung erzeugte Versorgungsspannung oder ein davor abgeleitetes Spannungssignal als Steuersignal verwendet. Die stabilisierte und/oder gleichgerichtete Versorgungsspannung dient nun als Steuergröße zur Ansteuerung des (spannungsgesteuerten) Oszillators. Der Oszillator erzeugt daraus ausgangsseitig ein Frequenzsignal, wobei die Frequenz dieses Frequenzsignals eine Funktion der stabilisierten und/oder gleichgerichteten Versorgungsspannung ist. Die Basisstation ist nun in der Lage, über das Vermessen der Seitenbänder des zurückgestreuten Signals Frequenz-Informationen des Frequenzsignals und damit unmittelbar eine Information über die Versorgungsspannung und dessen Dynamik zu gewinnen.

In einer sehr vorteilhaften Ausgestaltung der Erfindung ist zwischen einem Ausgang des Oszillators und einem Steuereingang des diesem Oszillator nachgeschalteten Modulators eine Teilereinrichtung mit einer ersten Anzahl an Teilerstufen vorgesehen. Die Teilereinrichtung ist nun dazu ausgelegt, eine von dem Oszillator erzeugte Oszillatorfrequenz herunterzuteilen.

Vorzugsweise weist die Teilereinrichtung eine Rücksetzeinrichtung auf, über die die Teilereinrichtung bei Unterschreiten eines Signalpegels rücksetzbar ist. Typischerweise weist die Teilereinrichtung zu diesem Zwecke einen Steuereingang zur Einkopplung eines POR-Steuersignals (POR = Power on Reset) auf, mit welchem eine Schwelle, bei der die Teilereinrichtung zurückgesetzt wird, einstellbar ist. In dieser Ausgestaltung wird das von dem Oszillator erzeugte Frequenzsignal zunächst einem nachgeschalteten Frequenzteiler zugeführt. Wird dieser Frequenzteiler bei Unterschreitung eines bestimmten Spannungspegels zurückgesetzt, kann zum Einen eine analoge oder digitale Schwelle eines Transponder spezifischen Parameters vermessen werden. Zum Anderen kann durch das schnelle Hin- und Herschalten des Modulators die Last verringert werden, sodass sich auch hier Lastverhältnisse ergeben, die mit einem üblicherweise verwendeten normalen Betriebsmodus korrespondieren. In einer sehr vorteilhaften Ausbaustufe dieses Testmodus lassen sich statt des POR-Steuersignals auch andere analoge Steuergrößen vermessen, indem der Takt des von dem Oszillator erzeugten Frequenzsignals abgeschaltet bzw. als POR-Signal für einen Zähler verwendet wird.

In einer vorteilhaften Ausgestaltung ist der Modulator als Backscatter-Modulator oder als Lastmodulator ausgebildet und weist eine mit der Antenne gekoppelte, variabel einstellbare Last auf. Durch Veränderung dieser Last ist auf an sich bekannte Weise der Rückstreuquerschnitt der Antenne veränderbar und damit die Reflexionseigenschaften der Antenne einstellbar.

In einer ersten Ausgestaltung weist der Modulator eine kapazitiv veränderliche Last auf, wobei sich durch Veränderung der Kapazität der kapazitiven Last der Phasenwinkel eines von der Antenne rückgestreuten Signals ändert. Diese Phasenänderung lässt sich dann vorteilhafterweise von der Basisstation als Nutzsignal detektieren.

In einer weiteren vorteilhaften Ausgestaltung ist die kapazitiv veränderliche Last als steuerbarer Varaktor ausgebildet, dessen Kapazität somit durch eine Steuergröße einstellbar ist. Besonders vorteilhaft sind CMOS-kompatible, steuerbare Varaktoren, deren steuerbare Gatekapazität beispielsweise Bestandteil eines CMOS-Transistors sind. Ebenfalls vorteilhaft sind so genannte CMOS-Anreicherungs-Varaktoren (accumulation mode), also MOSFETs mit kurzgeschlossener Drain-Source-Laststrecke, die gegen die Gateelektrode des MOSFETs betreibbar ist. Diese Art der Varaktoren zeichnen sich durch eine sehr hohe Güte aus und vergrößern damit die Kommunikationsdistanz des Transponders zu der Basisstation. Die kapazitiv veränderliche Last bzw. der steuerbare Varaktor kann dabei vorteilhafterweise von einer Steuereinrichtung angesteuert werden, mit der es möglich ist, eine Steuerspannung über den variablen Teil der kapazitiv veränderlichen Last anzulegen. Auf diese Weise lassen sich zumindest zwei und im Idealfall eine beliebige Vielzahl unterschiedlicher Phasenwinkel des rückgestreuten Signals realisieren.

In einer ebenfalls sehr vorteilhaften Ausgestaltung ist die kapazitive Last als mikromechanische Komponente ausgebildet, die im Rahmen des Modulators kapazitiv wirkt. Die mikromechanische Komponente wird dann durch externe Umweltbedingungen, wie zum Beispiel Umgebungstemperatur des Transponders, Umgebungsdruck des Transponders, etc. gesteuert, wodurch sich eine sehr einfache Sensorfunktion ergibt. Bei einer Veränderung der Umgebungstemperatur bzw. des Umgebungsdrucks ergibt sich auch eine Kapazitätsänderung der mikromechanischen Komponente. Diese Kapazitätsänderung kann nun als Steuersignal für die Modulation verwendet werden. Statt der Umgebungstemperatur und dem Umgebungsdruck sind auch andere Umweltbedingungen und Steuergrößen, deren Änderung eine Kapazitätsänderung der mikromechanischen Komponente nach sich ziehen, denkbar.

In einer sehr vorteilhaften Weiterbildung ist eine separate Sensoreinrichtung vorgesehen, die mit der Steuereinrichtung gekoppelt ist und die die gemessenen Sensordaten der Steuereinrichtung zuführt. Die separate Sensoreinrichtung wirkt somit nicht direkt auf den Modulator ein. Die Sensoreinrichtung kann auch als separate integrierte Schaltung ausgebildet sein, welche zum Beispiel von der aus dem elektromagnetischen Feld extrahierten Versorgungsspannung versorgt wird.

In einer sehr vorteilhaften Ausgestaltung ist die Sensoreinrichtung zusammen mit einer Sende/Empfangseinrichtung auf einem einzigen Halbleiterchip integriert. Ist es möglich, die Sensoreinrichtung zusammen mit den anderen Komponenten der Sende/Empfangsvorrichtung des Transponders auf einem Chip zu integrieren, entfallen die aufwändigen und Leistungsverbrauchenden Pad-Treiberschaltungen. Diese Sensoreinrichtung lässt sich auch bei passiven Transponderanwendungen implementieren. Problematisch kann allerdings sein, dass dadurch eine kontinuierliche Erfassung der Sensordaten erschwert wird. Aus diesen Gründen ist es vorteilhaft, eine aus dem elektromagnetischen Feld extrahierte Versorgungsspannung mit einer von dem (semipassiven) Transponder bereitgestellten Versorgungsspannung zu kombinieren. Dies lässt sich sehr einfach dadurch realisieren, dass wenigstens eine Komponente der Sende/Empfangsvorrichtung permanent durch die externe Versorgungsspannung versorgt wird. Die Spannungsversorgung wenigstens einer Komponente der Sende/Empfangsvorrichtung wird dabei durch eine Regelschaltung gesteuert. Reicht die aus dem elektromagnetischen Feld extrahierte Versorgungsspannung aus, erfolgt die Spannungsversorgung dieser Komponente durch die extrahierte Versorgungsspannung. Die eben genannte Komponente der Sende/Empfangseinrichtung kann vorteilhafterweise die Sensoreinrichtung sein. Auf diese Weise wird sichergestellt, dass die Sensoreinrichtung stets mit Energie versorgt wird und damit eine kontinuierliche Erfassung der Sensordaten möglich wird. Eine weitere Möglichkeit für die Bereitstellung der Energieversorgung der Sensoreinrichtung ergibt sich, wenn bei einer eben beschriebenen kombinierten Energieversorgung die Sende/Empfangseinrichtung eine Ladeeinrichtung enthält, die Bestandteil der Steuereinrichtung ist. Mit ihr lässt sich ein Akkumulator des Transponders so lange aufladen, wie der Transponder sich im elektromagnetischen Feld befindet.

In einer vorteilhaften Ausgestaltung weist die Sensoreinrichtung zumindest einen kapazitiv wirkenden und/oder einen ohmsch wirkenden Sensor auf.

Bei einem ohmsch wirkenden Sensor kann ein zu messender Strom durch den Sensor erfasst und ausgewertet werden. Die Widerstandänderung des ohmschen Sensors kann aber auch durch eine Spannungsmessung, beispielsweise mit Hilfe eines Spannungsteilers, erfasst werden. Soll zum Beispiel die Umgebungstemperatur erfasst werden, dann werden Sensorelemente bereitgestellt, deren Eigenschaften von der Temperatur beeinflusst werden. Beispielsweise kann hierfür ein Sensorelement mit einem pn-Übergang bereitgestellt werden, bei dem die Spannung über dem pn-Übergang temperaturabhängig ist. Diese Temperaturabhängigkeit der Spannung über den pn-Übergang des Sensorelementes kann mit einer allgemein bekannten Auswerteschaltungsanordnung ausgewertet werden. Diese Spannung kann nach entsprechender Auswertung, beispielsweise mittels des oben genannte Oszillators, unter Verwendung der Rückstreuung zu der Basisstation zurückübertragen werden und dort von der Basisstation ausgewertet werden.

Wirkt der Sensor kapazitiv und kann die Änderung der Kapazität des Sensors nicht direkt zur Modulationssteuerung des Modulators eingesetzt werden, dann ergibt sich die Möglichkeit, mit Hilfe der Kapazitätsänderung des Sensors durch Ansteuerung der Sensoreinrichtung mit einer bestimmten Frequenz eine Sensorsignalspannung zu generieren. Dies ist zum Beispiel dann möglich, wenn der Strom durch den kapazitiv wirkenden Sensor gemessen und nach erfolgter Aufbereitung des Signals ausgewertet und in entsprechender Form abgespeichert wird. Auf diese Weise ist es möglich, den gemessenen Wert als Wertekette und/oder in digitaler Form unter Verwendung der Rückstreuung zur Basisstation zu übertragen. Zusätzlich oder alternativ ist es auch möglich, einen Strom unter Verwendung des kapazitiv wirkenden Sensors zu messen und nach erfolgter Aufbereitung des gemessenen Stromsignals dieses dem Modulator in geeigneter Form zuzuführen. Dies lässt sich wiederum durch einen stromgesteuerten oder spannungsgesteuerten Oszillator realisieren. Der kapazitiv wirkende Sensor kann auch als kapazitiver Spannungsteiler ausgebildet sein, der zumindest eine einstellbare Kapazität enthält. Die sich auf Grund der variablen Kapazität über den Elementen des kapazitiven Spannungsteilers einstellende Spannung kann nun von der Steuereinrichtung, beispielsweise unter Verwendung eines AD-Wandlers, ausgewertet werden.

Der ohmsch oder kapazitiv wirkende Sensor kann zusätzlich auch Bestandteil einer Messbrückenschaltung sein. Die sich durch die Veränderung des ohmschen oder kapazitiven Anteils einstellende Messbrückenspannung kann nach entsprechender Weiterverarbeitung in der Steuereinrichtung mittels Rückstreuung an die Basisstation zurückübertragen werden. Zusätzlich oder alternativ kann der kapazitiv wirkende Sensor auch als Differenzialkondensator ausgebildet sein und in einer so genannten CCRR-Messbrücke verwendet werden. Bei dieser Anwendung stellt sich bei Beaufschlagung durch eine Wechselspannung eine amplitudenmodulierte Messbrückenspannung ein, die ebenfalls nach Auswertung durch die Steuereinrichtung als Modulationssteuerspannung verwendet werden kann.

Wird der kapazitiv oder ohmsch wirkende Sensor dazu verwendet, eine bestimmte Frequenz eines Oszillators einzustellen, so kann die von dem Oszillator erzeugte Frequenz einem nachgeschalteten Frequenzspannungsumsetzer zugeführt werden. Eine einfache Schaltung hierzu ist ein Tiefpassfilter oder ein Hochpassfilter. Diese Filter können durch eine Kombination von Wiederständen und Kondensatoren auf schaltungstechnisch sehr einfach Weise realisiert werden. Eine weitere Möglichkeit ergibt sich, wenn die von dem Oszillator erzeugte Frequenz mittels geeigneter Teilerschaltungen als pulsweitenmoduliertes Signal auf den nachgeschalteten Modulator einwirkt.

Der kapazitiv oder ohmsch wirkende Sensor kann ferner dazu verwendet werden, eine vorgegebene Zeitdauer eines monostabilen Multivibrators einzustellen. Diese vorgegebene Zeitdauer kann nun dazu verwendet werden, in Form einer Modulationsänderung auf den Modulator einzuwirken. Hierdurch ist eine Synchronisation bzw. Triggerung des Multivibrators durch die Basisstation möglich. Getriggert werden kann der monostabile Multivibrator auch durch eine Steuervorrichtung der Sende/Empfangsvorrichtung.

In einer weiteren, ebenfalls vorteilhaften Ausgestaltung weist die Sensoreinrichtung zumindest einen als Stromquelle und/oder als Spannungsquelle wirkenden Sensor auf. Wirkt dieser Sensor als Stromquelle oder als Spannungsquelle, kann das gemessene Sensorsignal direkt oder auch indirekt, beispielsweise zeitlich versetzt auf eine Anforderung der Basisstation hin, zur Beeinflussung einer Phasenmodulation (PSK-Modulation) des Modulators verwendet werden. Eine indirekte Möglichkeit ist auch dadurch gegeben, wenn das vom Sensor erzeugte Sensorsignal zur Frequenzverschiebung eines Oszillators verwendet wird. Das von dem Oszillator ausgangsseitig erzeugte Frequenzsignal kann dann einem nachgeschalteten Frequenz-Spannungs-Umsetzer zugeführt werden, der in einer sehr einfachen Ausgestaltung als Tiefpass- oder Hochpassfilter, beispielsweise als einfaches RC-Filter, ausgebildet ist.

In einer ebenfalls sehr vorteilhaften Ausgestaltung ist eine weitere Steuereinrichtung vorgesehen, die die Steuereinrichtung ansteuert und die ein von dem Modulator erzeugtes Modulationssignal so einstellt, das der Transponder mit einer Basisstation kommunizieren kann. Die weitere Steuereinrichtung dient der Steuerung der eigentlichen Datenkommunikation zwischen Transponder und Basisstation.

In einer sehr vorteilhaften Ausgestaltung ist die Steuereinrichtung Bestandteil der weiteren Steuereinrichtung. Die weitere Steuereinrichtung kann dabei als programmgesteuerte Einrichtung, beispielsweise als Mikroprozessor oder Mikrocontroller, ausgebildet sein. Für einen Transponder ist es vorteilhaft, wenn ein eher niederbitratiger Mikroprozessor, beispielsweise ein 4-Bit-Prozessor, als programmgesteuerte Einrichtung eingesetzt wird. Daneben wäre es auch denkbar, wenn die Steuereinrichtung und/oder die weitere Steuereinrichtung als programmierbare oder nicht programmierbare Logikschaltung, beispielsweise als PLD-Schaltung oder als FPGA-Schaltung, ausgebildet sind.

In einer weiteren vorteilhaften Ausgestaltung der vorliegenden Erfindung weißt der Transponder eine Sende/Empfangeinrichtung auf, die die externe Schnittstelle des Transponders darstellt. Die Sende/Empfangseinrichtung enthält die als Sende/Empfangsantenne ausgebildete Antenne und den Modulator, wobei die Sende/Empfangsantenne zum Empfangen hochfrequenter Trägersignale aus einem von einer Basisstation erzeugten elektromagnetischen Feld und zum Zurücksenden von entsprechenden Antwortsignalen vorgesehen ist.

In einer vorteilhaften Ausgestaltung weist die Sende/Empfangsantenne eine RSSI-Schaltung zur Bereitstellung einer RSSI-Spannung auf. Die RSSI-Spannung kann hier ebenfalls als Transponder spezifischer Parameter verwendet werden In einer weiteren, ebenfalls vorteilhaften Ausgestaltung weißt die Sende/Empfangseinrichtung einen Gleichrichterpfad auf, in dem ein gleichrichtendes Element, insbesondere eine Gleichrichterdiode, zur Bereitstellung einer gleichgerichteten Spannung vorgesehen ist.

Die Erfindung wird nachfolgend anhand der in den schematischen Figuren der Zeichnung angegebenen Ausführungsbeispielen näher erläutert. Es zeigt dabei:

Fig. 1    ein Blockschaltbild zur Darstellung eines RFID-Systems mit einer Basisstation und einem mit dieser Basisstation kommunizierenden erfindungsgemäßen Transponder;

Fig. 2    ein Blockschaltbild zur Darstellung eines allgemeinen Aufbaus eines erfindungsgemäßen Transponders;

Fig. 3    ein erstes Ausführungsbeispiel für einen erfindungsgemäßen Transponder mit Modulatorsteuerung;

Fig. 4    ein zweites Ausführungsbeispiel eines erfindungsgemäßen Transponders mit Modulatorsteuerung.

In den Figuren der Zeichnung sind gleiche bzw. funktionsgleiche Elemente und Signale - sofern nichts Anderes angegeben ist - mit denselben Bezugszeichen versehen worden.

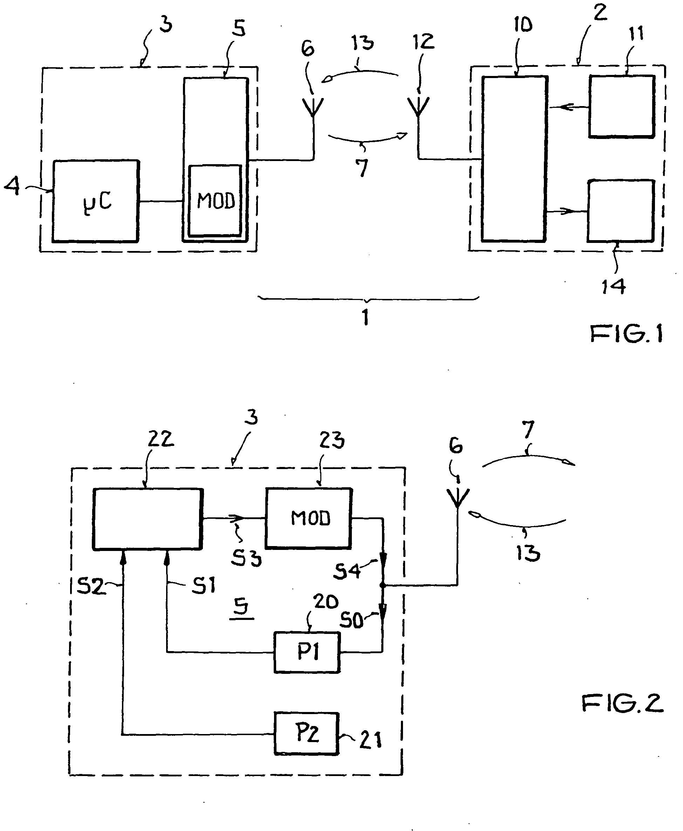

Fig. 1 zeigt anhand eines Blockschaltbildes den prinzipiellen Aufbau eines RFID-Systerns mit einer Basisstation und einem mit dieser Basisstation kommunizierenden Transponder.

Das mit Bezugszeichen 1 bezeichnete Kommunikationssystem enthält eine Basisstation 2 und einen Backscatter-Transponder 3. Basisstation 2 und Transponder 3 stehen dabei in kommunikativer Verbindung zueinander. Das Kommunikationssystem 1, welches zum Beispiel ein RFID-System ist, kann zum Beispiel als so genanntes Master-Slave-Kommunikationssystem ausgebildet sein, wobei die Basisstation 2 als Master und der oder die Transponder 3 jeweils als Slave fungieren.

Der Transponder 3 umfasst eine Steuereinrichtung 4, eine Sende-/Empfangseinrichtung 5 sowie eine Send-/Empfangsantenne 6. Die Sende-/Empfangseinrichtung 5, die mit der Steuereinrichtung 4 sowie mit der Sende-/Empfangsantenne 6 gekoppelt ist, enthält einen hier lediglich angedeuteten Modulator. Dessen Funktionsweise wird nachfolgend anhand der Figuren 2 - 4 noch detailliert beschrieben. Es sei angenommen, dass die Sende-/Empfangsantenne 6 des Backscatter-Transponders 3 Reflexionseigenschaften aufweist, wobei die Reflexionseigenschaften der Sende-/Empfangsantenne 6 über den Modulator der Sende-/Empfangseinrichtung 5 veränderbar ist.

Die Basisstation 2 weist eine Sende-/Empfangseinrichtung 10 (Trancevier) sowie eine Steuereinrichtung 11 zur Steuerung der Datenkommunikation auf. Die Sende-/Empfangseinrichtung 10 der Basisstation 2 ist dazu ausgelegt, über die Antenne 12 hochfrequente Trägersignale 13 zu der Antenne 6 des Transponders 3 zu senden. In gleicher Weise ist die Sende-/Empfangseinrichtung 5 des Transponders 3 dazu ausgelegt, im Vollduplexbetrieb oder Halbduplexbetrieb auf die gesendeten Trägersignale 13 hin entsprechende Antwortsignale 7 zurück zu der Basisstation 2 zu senden.

Die Steuerung der Datenkommunikation erfolgt jeweils über die basisstationenseitige Steuereinrichtung 11 und die transponderseitige Steuereinrichtung 4. Die Steuereinrichtungen 4, 11 sind beispielsweise als Mikrocontroller ausgebildet.

Die Basisstation 2 weist ferner eine Auswerteeinrichtung 14 auf. Die Auswerteeinrichtung 14 ist im Empfangspfad der Basisstation 2 angeordnet und dem Empfänger nachgeschaltet angeordnet. In der Auswerteeinrichtung 14 erfolgt im Testbetrieb nun die Auswertung der durch Backscattering von dem Transponder 3 gesendeten Signale und damit die Ermittlung der Transponder spezifischen Parameter. Im vorliegenden Ausführungsbeispiel wurde zur besseren Darstellung der Erfindung die Auswerteeinrichtung 14 als gesonderte Funktionseinheit dargestellt.

Fig. 2 zeigt anhand eines schematischen Blockschaltbildes ein allgemeines Ausführungsbeispiel eines erfindungsgemäßen Transponders.

Bei dem Transponder 3 ist hier lediglich die Sende-/Empfangseinrichtung 5 dargestellt, dass heißt auf die Darstellung der übrigen Komponenten des Transponders 3, dabei insbesondere dessen Steuereinrichtung 4, wurde hier der besseren Übersichtlichkeit halber verzichtet. Die Sende-/Empfangseinrichtung 5 des Transponders 3 weist im vorliegenden Ausführungsbeispiel zwei Sensoren 20, 21 auf. Der erste Sensor 20 ist im Empfangspfad des Transponders 3 angeordnet und eingangsseitig mit der Sende-/Empfangsantenne 6 verbunden, so dass dem ersten Sensor 20 von der Sende-/Empfangsantenne 6 aufgenommene elektromagnetische Signale zuführbar sind. Beide Sensoren 20, 21 sind ausgangsseitig mit einer Steuereinrichtung 22 verbunden. Der Transponder 3 weist ferner einen Modulator 23 auf, der steuerseitig von der Steuereinrichtung 22 angesteuert wird und der ausgangsseitig mit der Sende-/Empfangsantenne 6 verbunden ist.

Die beiden Sensoren 20, 21 sind dazu ausgelegt, Transponder spezifische Parameter P1, P2 aufzunehmen. Der erste Sensor 20 ist dazu ausgelegt, einen Transponder spezifischen Parameter P1, der von dem empfangenem elektromagnetischen Signal 13 abgeleitet wird, aufzunehmen, wohingegen der zweite Sensor 21 dazu ausgelegt, einen von diesem Signal 13 unabhängigen Transponder spezifischen Parameter P2 aufzunehmen. Die beiden Sensoren 20, 21 erzeugen ausgangsseitig Signale S1, S2, die Informationen über die von dem jeweiligen Sensor 20, 21 aufgenommenen Transponder spezifischen Parameter P1, P2 enthalten. Abhängig von diesen Signalen S1, S2 und damit von den entsprechenden Transponder spezifischen Parametern P1, P2 erzeugt die Steuereinrichtung 22 ein Steuersignal S3 zur Ansteuerung des nachgeschalteten Modulators 23. Abhängig von diesem Steuersignal S3 verändert der Modulator 23 die Reflexionseigenschaften der Sende/Empfangsantenne 6, indem zum Beispiel deren Rückstreuquerschnitt verändert wird. Der Rückstreuquerschnitt lässt sich beispielsweise durch eine Änderung einer mit der Antenne 6 gekoppelten ohmschen und/oder kapazitiven Last beeinflussen. Das von der Sende/Empfangsantenne 6 rückgestreute Signal 7 kann somit abhängig von der über dem Modulator 23 eingestellten Reflexionseigenschaft der Sende/Empfangsantenne 6 variiert werden und enthält damit eine Information des jeweils Transponder spezifischen Parameters P1, P2.

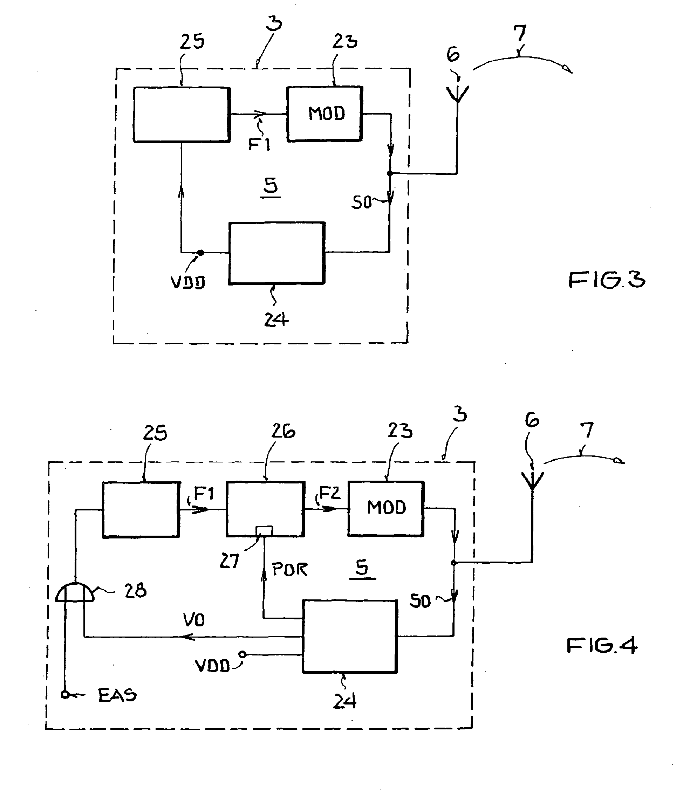

Fig. 3 zeigt ein erstes Ausführungsbeispiel eines erfindungsgemäßen Transponders entsprechend Fig. 2.

Im vorliegenden Ausführungsbeispiel der Fig. 3 weist der Transponder 3 eine Energieversorgung 24 auf, die eingangsseitig mit der Sende/Empfangsantenne 6 verbunden ist. Die Energieversorgung 24 erzeugt aus dem über die Sende/Empfangsantenne 7 eingekoppelten Sendesignal S0 an ihrem Ausgang eine stabilisierte Ausgangsspannung VDD. Der Energieversorgung 24 ist ein Oszillator 25 mit der Möglichkeit der Frequenzsteuerung nachgeschaltet, wobei die von der Energieversorgung 24 ausgangsseitig erzeugte stabilisierte Ausgangsspannung VDD als Steuergröße für die Frequenzeinstellung des nachgeschalteten Oszillators 25 herangezogen wird. Abhängig von der Größe der stabilisierten Ausgangsspannung VDD erzeugt der Oszillator 25 ausgangsseitig ein Frequenzsignal F1, wobei die Oszillatorfrequenz f1 des Frequenzsignals F1 eine Funktion der stabilisierten Versorgungsspannung VDD ist, das heißt es gilt:

$$f1 = f(VDD)$$

Der dem Oszillator 25 ausgangsseitig nachgeschaltete Modulator 23 wird mit dem Frequenzsignal F1 stimuliert, sodass abhängig von der Frequenz f1 des Frequenzsignals F1 die Last bzw. die Imdpedanz des Modulators 23 verändert wird. Der Modulator 23 ist im vorliegenden Ausführungsbeispiel als Last- bzw. als Backscatter-Modulator 23 ausgebildet, bei dem somit die ohmsche und/oder kapazitive Last und damit auch der Rückstreuquerschnitt der mit dem Modulator 23 verbundenen Sende/Empfangsantenne 6 variierbar ist.

Durch Ausnutzung der Reflexionseigenschaften der Sende/Empfangsantenne werden Signale 7 zurück zur Basisstation 2 gestreut und dort ausgewertet. Eine Variation der Reflexionseigenschaften der Sende/Empfangsantenne bewirkt eine Veränderung des Rückstreuverhaltens in Phase und/oder Amplitude, was sich in einer Variation der Amplitude der Seitenbänder (Hilfsträger) des zurückgestreuten Signals 7 äußert. Durch Auswertung der genauen spektralen Lage dieser Hilfsbänder kann nun auf die Frequenz f1 des von dem Oszillator 25 erzeugten Frequenzsignals F1 und damit, da diese Frequenz f1 eine Funktion der extrahierten Ausgangsspannung VDD ist, auf eben diese Ausgangsspannung VDD geschlossen werden. Ist diese Ausgangsspannung VDD bekannt, kann auf die Effizienz eines im transponderseitigen Empfangspfad angeordneten Gleichrichters (in Fig. 3 nicht dargestellt) geschlossen werden.

In einer weiteren Ausgestaltung kann statt der Energieversorgung 24 zusätzlich oder alternativ eine RSSI-Schaltung (RSSI = received signal strenght indicator) vorgesehen sein, die ausgangsseitig eine RSSI-Spannung bereitstellt (in Fig. 3 nicht gezeigt). In gleicher Weise wie bei dem Ausführungsbeispiel in Fig. 3 kann diese RSSI-Spannung als Steuergröße für den Oszillator 25 herangezogen werden und auf diese Weise durch Frequenzsteuerung des Modulators 23 von der Basisstation 2 ausgewertet werden.

Der Oszillator 25 sei im vorliegenden Ausführungsbeispiel als spannungsgesteuerter Oszillator 25 (VCO) ausgebildet, der also eingangsseitig über ein Spannungssignal VDD gesteuert wird. Denkbar wäre statt des spannungsgesteuerten Oszillators 25 auch ein stromgesteuerter Oszillator (ICO), der über ein Stromsignal gesteuert wird, jedoch wäre im hier gezeigten Ausführungsbeispiel der Fig. 3 dann noch eine Einrichtung zur Umwandlung des Spannungssignals VDD in ein entsprechendes Stromsignal erforderlich.

Fig. 4 zeigt ein weiteres Ausführungsbeispiel eines erfindungsgemäßen Transponders.

Zwischen dem Oszillator 25 und dem nachgeschaltetem Modulator 23 ist eine Teilereinrichtung 26, beispielsweise ein mehrstufiger Teiler, angeordnet. Diesem Teiler 26 wird das Frequenzsignal F1 des Oszillators 25 zugeführt. Der Teiler 26 erzeugt daraus das heruntergeteilte Frequenzsignal F2. Der Teiler 26 weist ferner einen Steuereingang 27 auf, in den ein Steuersignal POR (POR = Power on Reset) einkoppelbar ist. Über das Steuersignal POR lässt sich eine POR-Schwelle des Teilers 26 einstellen.

Das Steuersignal POR wird im vorliegenden Ausführungsbeispiel von der Energieversorgung 24 bereitgestellt. Die Energieversorgung 24 erzeugt neben der stabilisierten Ausgangsspannung VDD ferner ein gleichgerichtetes Ausgangsspannungssignal V0, welches als Steuergröße für die Frequenzeinstellung des Oszillators 25 dient. Zwischen der Energieversorgung 24 und dem Oszillator 25 ist ferner ein ODER-Gatter 28 vorgesehen, welches den Betriebsmodus des erfindungsgemäßen Transponders 3 charakterisieren soll. Dem ODER-Gatter 28 wird eingangsseitig das gleichgerichtete Ausgangssignal V0 und zusätzlich ein Steuersignal EAS (EAS = electronic article surveillance) zugeführt. Durch Verwendung eines solchen ODER-Gatters 28 kann der erfindungsgemäße Transponder 3 auch durch eine EAS-Funktionalität erweitert werden, indem, sofern das Spektrum (RF-Regularien) es zulässt, die erfindungsgemäße Empfängerschaltung 5 der Transponders 3 ebenfalls zur Artikelsicherheit aktiviert wird. Als Transponder spezifischer Parameter wird hier somit eine Information dahingehend übermittelt, ob der Transponder bereits entwertet wurde oder nicht.

Die gezeigten Ausführungsbeispiele in den Figuren 2 - 4 dienen lediglich dazu, einen Testbetrieb zur Ermittlung Transponder spezifischer Parameter zu erläutern. Diese Ausführungsbeispiele sind nicht geeignet, die Funktionsweise des Transponders 3 im Falle einer bidirektionalen Datenkommunikation zwischen Basisstation 2 und Transponder 3 unter Ausnutzung des Vorwärtslinks und Rückwärtslinks darzulegen.

Neben den obigen Ausführungsbeispielen eines erfindungsgemäßen Transponders 3 lässt sich dessen Funktionsweise auch wie folgt erweitern oder abändern:

Der Transponder 3 erhält seine Kommandos über Symbole, die von der Basisstation ausgestrahlt werden. Um sicher zu stellen, dass diese auch als solche empfangen und ausgewertet werden, dient das empfangene Signal 7 beispielsweise als Triggergröße und löste einen Wechsel der Modulation im Modulator 23 aus. Die Modulation wird dann, wenn das empfangene Symbol des Signals 7 abgeschaltet wurde, nach einer bestimmten Zeit zurückgesetzt. Hierdurch lässt sich die Einleitung des Empfangsvorgangs sowie das Wegschalten nachvollziehen. Die Messung ist daher wichtig, da aufgrund der unterschiedlichen Feldstärke die Detektionsschaltung zum Detektieren eines Feldstärkeeinbruchs (Notch) unterschiedlich ist. Auch lässt sich durch solche Methoden die lokale Feldstärke des elektrischen Feldes, zum Beispiel durch Fadingeffekte, vermessen.

Erfindungsgemäß wurden im Transponder 3 entsprechende Testmodis implementiert, die ein Vermessen der Transponder 3 spezifischen Parameter unter Last ermöglichen. Der Transponder 3 empfängt hierzu die von der Basisstation 2 gesendeten Signale 7 und führt auch die entsprechenden Kommandosequenzen aus. Über die gesamte Sequenz hinweg ist die Basisstation 2 zusätzlich in der Lage, die Transponder spezifischen Parameter, beispielsweise über den Verlauf der Last, zu verfolgen. Eine weiter Möglichkeit zur Erfassung dieser Transponder spezifischen Parameter ergibt sich dadurch, dass die Last zum Beispiel durch einen Widerstand am Ausgang eines in der Sende/Empfangseinrichtung angeordneten Gleichrichters simuliert wird. Um exakte Messungen zu ermöglichen, wird zu einem fest vorgegebenen Zeitpunkt, zum Beispiel zum Eintreffen des ersten Kommandos, eine Größe zurück übermittelt, die sich aus einer Referenz ergibt.

Obgleich die vorliegende Erfindung vorstehend anhand eines bevorzugten Ausführungsbeispiels beschrieben wurde, ist sie darauf nicht beschränkt, sondern auf vielfältige Art und Weise modifizierbar.

Die Erfindung sei insbesondere nicht ausschließlich auf RFID-Systeme beschränkt, sondern lässt sich selbstverständlich auch erweitern, beispielsweise auf die Einzelteilerkennung (engl: item identification). Häufig müssen einzelne Teile nicht eindeutig erkannt werden. Hier reicht es auch meist auch aus, dass ein Vorhandensein beispielsweise eines fehlerhaften Teils ausgeschlossen werden kann. Dies wird meist auch als nicht eindeutige Identifikation bezeichnet. Beim Betrieb des Transponders in diesem Zusammenhang weist dieser die Funktion eines fernsteuerbaren Sensors (engl: remote sensor) auf. Die Erfindung betrifft also auch ausdrücklich solche Sensoren, bei denen eine Kommunikation zum Auslesen und Beschreiben von Daten eines Datenträgers bzw. Sensors vorgenommen werden. Als Beispiel für eine solche, so genannte ferngesteuerte Sensoranwendung sei auf einen Temperatursensor, einen Drucksensor oder dergleichen verwiesen.

In den Fig. 1 - 4 wurde der besseren Übersichtlichkeit halber der Aufbau des RFID-Systems und insbesondere des Transponders bewusst stark vereinfacht dargestellt. Es versteht sich von selbst, dass die Basisstation und der Transponder die für eine Datenkommunikation zwischen Basisstation und Transponder erforderlichen Funktionseinheiten wie Demodulator, Energieversorgung, Synchronisationseinrichtung, Dekodierer und dergleichen enthalten.

In den Fig. 2 - 4 wurde jeweils zwischen der Sensoreinrichtung und der Steuereinrichtung zur Ansteuerung des Modulators unterschieden. Es versteht sich von selbst, dass die Sensoreinrichtung auch Bestandteil der Steuereinrichtung sein kann. Denkbar wäre ferner, dass die Sensoreinrichtung bereits die Steuereinrichtung darstellt, beispielsweise dann, wenn die von der Sensoreinrichtung ermittelten Größen bereits als Steuersignale zur Ansteuerung des Modulators dienen können.

Bezugszeichenliste

1   Kommunikationssystem, RFID-System
2   Basisstation
3   (Backscatter-)Transponder
4   Steuereinrichtung
5   Sende-/Empfangseinrichtung
6   Send-/Empfangsantenne, (Transponder-)Antenne
7   reflektierte Signale
10  Sende-/Empfangseinrichtung
11  Steuereinrichtung
12  Send-/Empfangsantenne, (Basisstationen-)Antenne
13  gesendete Trägersignale
14  Auswerteeinrichtung

20  Sensor
21  Sensor
22  Steuereinrichtung
23  Modulator
24  Energieversorgungseinrichtung
25  Oszillator (VCO, ICO)
26  Teilereinrichtung, Teiler
27  Steuereingang
28  ODER-Gatter

ESS   Steuersignal
F1    Frequenzsignal
F2    Frequenzsignal
P1    Parameter
P2    Parameter
POR   Steuersignal
S0    Sendesignal

S1    Signal
S2    Signal
S3    Steuersignal
V0    Ausgangsspannungssignal
VDD   (extrahierte, stabilisierte) Ausgangsspannung

**Patentansprüche**

1.  Backscatter-Transponder (3) für ein HF-Kommunikationssystem (1) mit modulierter Rückstrahlung,

    a) mit einer Antenne (6) zum Empfangen hochfrequenter Trägersignale (13), wobei die Antenne (6) Reflexionseigenschaften aufweist,
    b) der Transponder in einem ersten Betriebsmodus zur Datenkommunikation zwischen Basisstation und Transponder betreibbar ist, wobei
    d) der Transponder einen zweiten Betriebsmodus zur Übertragung Transponder-spezifischer Parameter aufweist, wobei der zweite Betriebmodus ein Testbetriebsmodus ist, wobei
    e) eine Steuereinrichtung (20-22) zur Bereitstellung Transponder-spezifischer Parameter (P1, P2) vorgesehen ist, die Aufschluss über die Qualität oder Leistungsfähigkeit oder Funktionsfähigkeit des Transponders geben,
    c) **dadurch gekennzeichnet, dass**
    f) ein von der Steuereinrichtung (20-22) ansteuerbaren Modulator (23) vorgesehen ist, der dazu ausgelegt ist, die Reflexionseigenschaften der Antenne (6) nach Maßgabe zumindest eines Transponder-spezifischen Parameters (P1, P2) zu verändern.

2.  Transponder nach Anspruch 1,
    **dadurch gekennzeichnet,**
    **dass** im zweiten Betriebsmodus die Steuereinrichtung (20-22) den Modulator (23) derart ansteuert, dass nach Maßgabe eines aus mindestens einem Transponder-spezifischen Parameter (P1, P2) abgeleiteten Steuersignals (F1, F2, S3) die Reflexionseigenschaften verändert werden.

3.  Transponder nach wenigstens einem der vorstehenden Ansprüche,
    **dadurch gekennzeichnet,**
    **dass** die Steuereinrichtung (20-22) zumindest einen Oszillator (25) mit Frequenzsteuerung aufweist, wobei dem Oszillator (25) als Steuergröße für dessen Frequenzeinstellung ein einen Transponder spezifischen Parameter (P1, P2) charakterisierendes Spannungssignal (S1, S2, VDD, V0) zuführbar ist und wobei der Oszillator (25) daraus ausgangsseitig das Steuersignal (F1, F2, S3) erzeugt.

4.  Transponder nach Anspruch 3,
    **dadurch gekennzeichnet,**
    **dass** der Oszillator (25) als stromgesteuerter Oszillator (25) oder als spannungsgesteuerter Oszillator (25) ausgebildet ist.

5.  Transponder nach wenigstens einem der Ansprüche 3 oder 4,
    **dadurch gekennzeichnet,**
    **dass** als Spannungssignal (S1, S2, VDD, V0) zur Charakterisierung Transponder spezifischer Parameter (P1, P2) eine aus einem elektromagnetischen Feld extrahierte Versorgungsspannung (VDD) und/oder eine Band-gap-Spannung und/oder eine RSSI-Ausgangsspannung vorgesehen ist.

6.  Transponder nach wenigstens einem der vorstehenden Ansprüche,
    **dadurch gekennzeichnet,**
    **dass** eine Energieversorgungseinrichtung (24) zur Energieversorgung des Transponders (3) vorgesehen ist, die dazu ausgelegt ist, aus einem, dem Transponder (3) umgebenden elektromagnetischen Feld eine Versorgungsspannung (VDD) zu extrahieren, wobei die Steuereinrichtung (20-22) das Steuersignal (F1, F2, S3) aus der extrahierten Versorgungsspannung (VDD) gewinnt.

7. Transponder nach Anspruch 6,
   **dadurch gekennzeichnet,**
   **dass** die Energieversorgungseinrichtung (24) eine stabilisierte und/oder gleichgerichtete Versorgungsspannung (VDD) erzeugt.

8. Transponder nach wenigstens einem der vorstehenden Ansprüche,
   **dadurch gekennzeichnet,**
   **dass** zwischen einem Ausgang des Oszillators (25) und einem Steuereingang des diesem nachgeschalteten Modulators (23) eine Teilereinrichtung (26) mit einer ersten Anzahl an Teilerstufen vorgesehen ist, welche zur Bereitstellung eines heruntergeteilten Steuersignals (F2) eine von dem Oszillator (25) erzeugte Oszillatorfrequenz (F1) teilt.

9. Transponder nach Anspruch 8,
   **dadurch gekennzeichnet,**
   **dass** die Teilereinrichtung (26) eine Rücksetzeinrichtung (27) aufweist, über die die Teilereinrichtung (26) bei Überschreiten eines Signalpegels rücksetzbar ist.

10. Transponder nach Anspruch 9,
    **dadurch gekennzeichnet,**
    **dass** die Rücksetzeinrichtung (27) einen Steuereingang zur Einkopplung eines POR-Steuersignals (POR) aufweist, mit welchem eine Schwelle zum Zurücksetzen der Teilereinrichtung (26) einstellbar ist.

11. Transponder nach wenigstens einem der vorstehenden Ansprüche,
    **dadurch gekennzeichnet,**
    **dass** der Modulator (23) als Backscatter-Modulator (23) oder als Lastmodulator (23) ausgebildet ist und eine mit der Antenne (6) gekoppelte variabel einstellbare Last aufweist, wobei der Rückstreuquerschnitt der Antenne (6) durch Veränderung der Last veränderbar ist.

12. Transponder nach Anspruch 11,
    **dadurch gekennzeichnet,**
    **dass** der Modulator (23) eine kapazitiv veränderliche Last aufweist, wobei sich durch Veränderung der Kapazität der kapazitiven Last der Phasenwinkel eines von der Antenne (6) rückgestreuten Signals (7) ändert.

13. Transponder nach Anspruch 12,
    **dadurch gekennzeichnet,**
    **dass** die kapazitiv veränderliche Last als steuerbarer Varaktor, insbesondere als CMOS-Varaktor, ausgebildet ist.

14. Transponder nach wenigstens einem der Ansprüche 12 oder 13,
    **dadurch gekennzeichnet,**
    **dass** die kapazitive Last als mikromechanische Komponente ausgebildet ist, deren Kapazität abhängig von einer Änderung einer Umgebungstemperatur und/oder eines Umgebungsdrucks des Transponders (3) variiert.

15. Transponder nach wenigstens einem der vorstehenden Ansprüche,
    **dadurch gekennzeichnet,**
    **dass** eine Sensoreinrichtung (20, 21) vorgesehen ist, die mit der Steuereinrichtung (22) gekoppelt ist oder Bestandteil der Steuereinrichtung (20-22) ist und die die gemessenen Sensordaten (P1, P2) der Steuereinrichtung (22) zuführt.

16. Transponder nach Anspruch 15,
    **dadurch gekennzeichnet,**
    **dass** die Sensoreinrichtung (20, 21) zusammen mit einer Sende-/Empfangseinrichtung (5) des Transponders (3) auf einem einzigen Halbleiterchip integriert ist.

17. Transponder nach wenigstens einem der Ansprüche 15 oder 16,
    **dadurch gekennzeichnet,**
    **dass** die Sensoreinrichtung (20, 21) zumindest einen kapazitiv wirkenden und/oder ohmsch wirkenden Sensor (20, 21) aufweist.

18. Transponder nach wenigstens einem der Ansprüche 15 bis 17,
    **dadurch gekennzeichnet,**
    **dass** die Sensoreinrichtung (20, 21) zumindest einen als Stromquelle und/oder als Spannungsquelle wirkenden Sensor (20, 21) aufweist.

19. Transponder nach wenigstens einem der vorstehenden Ansprüche,
    **dadurch gekennzeichnet,**
    **dass** eine weitere Steuereinrichtung (4) vorgesehen ist, die die Steuereinrichtung (20-22) ansteuert und die ein von dem Modulator (23) erzeugtes Modulationssignal (F1, F2) so einstellt, dass der Transponder (3) mit einer Basisstation (2) kommuniziert.

20. Transponder nach Anspruch 19,
    **dadurch gekennzeichnet,**
    **dass** die Steuereinrichtung (20-22) Bestandteil der weiteren Steuereinrichtung (4) ist.

21. Transponder nach wenigstens einem der vorstehenden Ansprüche,
    **dadurch gekennzeichnet,**

**dass** eine Sende-/Empfangseinrichtung (4) vorgesehen ist, die die externe Schnittstelle des Transponders (3) darstellt, die die als Sende/Empfangsantenne (6) ausgebildete Antenne (6) und den Modulator (23) aufweist, wobei die Sende/Empfangsantennte (6) zum Empfangen hochfrequenter Trägersignale (13) von einer Basisstation (2) und zum Zurücksenden von Antwortsignalen (6) vorgesehen ist.

22. Transponder nach Anspruch 21,
    **dadurch gekennzeichnet,**
    **dass** die Sende-/Empfangseinrichtung (4) eine RSSI-Schaltung zur Bereitstellung einer RSSI-Spannung aufweist.

23. Transponder nach wenigstens einem der Ansprüche 21 oder 22,
    **dadurch gekennzeichnet,**
    **dass** die Sende-/Empfangseinrichtung (4) einen Gleichrichterpfad aufweist, in dem ein gleichrichtendes Element zur Bereitstellung einer gleichgerichteten Spannung vorgesehen ist.

24. Transponder nach wenigstens einem der vorstehenden Ansprüche,
    **dadurch gekennzeichnet,**
    **dass** der Transponder (3) Bestandteil eines HF-Identifizierungs-Kommunikationssystems (1), insbesondere für ein RFID-Systems, ist.

**Claims**

1. Backscatter transponder (3) for an high-frequency communications system (1) with modulated backscatter,

   a) with an antenna (6) for reception of high-frequency carrier signals (13), wherein the antenna (6) has reflection characteristics,
   b) the transponder is operable in a first operating mode for data communication between base station and transponder, wherein
   c) the transponder has a second operating mode for transmission of transponder-specific parameters, wherein the second operating mode is a test operating mode, wherein
   d) a control device (20-22) for provision of transponder-specific parameters (P1, P2) is provided, which gives information about the quality or performance capability or functional capability of the transponder,
   e) **characterised in that**
   f) a modulator (23) controllable in drive by the control device (20-22) is provided, which is designed for the purpose of changing the reflection characteristics of the antenna (6) according to at least one transponder-specific parameter (P1, P2).

2. Transponder according to claim 1, **characterised in that** in the second operating mode the control device (20-22) controls the modulator (23) in drive in such a manner that the reflection characteristics are changed in dependence on a control signal (F1, F2, S3) derived from at least one transponder-specific parameter (P1, P2).

3. Transponder according to at least one of the preceding claims, **characterised in that** the control device (20-22) comprises at least one oscillator (25) with frequency control, wherein a voltage signal (S1, S2, VDD, V0) characterising a transponder-specific parameter (P1, P2) can be fed to the oscillator (25) as control variable for the frequency setting thereof and wherein the oscillator (25) generates the control signal (F1, F2, S3) therefrom at the output side.

4. Transponder according to claim 3, **characterised in that** the oscillator (25) is constructed as a current-controlled oscillator (25) or as a voltage-controlled oscillator (25).

5. Transponder according to at least one of claims 3 and 4, **characterised in that** a supply voltage (VDD) extracted from an electromagnetic field and/or a band-gap voltage and/or an RSSI output voltage is or are provided as voltage signal (S1, S2, VDD, V0) for characterisation of transponder-specific parameters (P1, P2).

6. Transponder according to at least one of the preceding claims, **characterised in that** an energy supply device (24) for energy supply of the transponder (3) is provided, which is designed for the purpose of extracting a supply voltage (VDD) from an electromagnetic field surrounding the transponder (3), wherein the control device (20-22) obtains the control signal (F1, F2, S3) from the extracted supply voltage (VDD).

7. Transponder according to claim 6, **characterised in that** the energy supply device (24) generates a stabilised and/or rectified supply voltage (VDD).

8. Transponder according to at least one of the preceding claims, **characterised in that** a divider (26) with a first number of divider stages, which for provision of a subdivided control signal (F2) divides an oscillator frequency (F1) generated by the oscillator (25), is provided between an output of the oscillator (25) and a control input of the modulator (23) connected downstream thereof.

9. Transponder according to claim 8, **characterised**

**in that** the divider (26) comprises a reset device (27) by way of which the divider (26) is resettable if a signal level is exceeded.

10. Transponder according to claim 9, **characterised in that** the reset device (27) has a control input for coupling in a POR control signal (POR) by which a threshold for resetting the divider (26) is settable.

11. Transponder according to at least one of the preceding claims, **characterised in that** the modulator (23) is constructed as a backscatter modulator (23) or as a load modulator (23) and has a variably settable load coupled with the antenna (6), wherein the backscatter cross-section of the antenna (6) is variable by changing the load.

12. Transponder according to claim 11, **characterised in that** the modulator (23) has a capacitively variable load, wherein the phase angle of a signal (7) backscattered by the antenna (6) changes by varying the capacitance of the capacitive load.

13. Transponder according to claim 12, **characterised in that** the capacitvely variable load is constructed as a controllable varactor, particularly as a CMOS varactor.

14. Transponder according to at least one of claims 12 and 13, **characterised in that** the capacitive load is constructed as a micromechanical component, the capacitance of which varies in dependence on a change in an ambient temperature and/or an ambient pressure of the transponder (3).

15. Transponder according to at least one of the preceding claims, **characterised in that** a sensor device (20, 21) is provided, which is coupled with the control device (22) or is a component of the control device (20-22) and which supplies the measured sensor data (P1, P2) to the control device (22).

16. Transponder according to claim 15, **characterised in that** the sensor device (20, 21) is integrated together with a transmitting/receiving device (5) of the transponder (3) on a single semiconductor chip.

17. Transponder according at least one of claims 15 and 16, **characterised in that** the sensor device (20, 21) comprises at least one capacitively acting and/or resistively acting sensor (20, 21).

18. Transponder according to at least one of claims 15 to 17, **characterised in that** the sensor device (20, 21) comprises at least one sensor (20, 21) acting as a current source and/or as a voltage source.

19. Transponder according to at least one of the preceding claims, **characterised in that** a further control device (4) is provided, which controls the control device (20-22) in drive and which so sets a modulation signal (F1, F2) generated by the modulator (23) that the transponder (3) communicates with a base station (2).

20. Transponder according to claim 19, **characterised in that** the control device (20-22) is a component of the further control device (4).

21. Transponder according to at least one of the preceding claims, **characterised in that** a transmitting/receiving device (4) is provided, which represents the external interface of the transponder (3), which comprises the antenna (6) constructed as transmitting/receiving antenna (6) and the modulator (23), wherein the transmitting/receiving antenna (6) is provided for reception of high-frequency carrier signals (13) from a base station (2) and for transmitting back response signals (6).

22. Transponder according to claim 21, **characterised in that** the transmitting/receiving device (4) comprises an RSSI circuit for provision of an RSSI voltage.

23. Transponder according to at least one of claims 21 and 22, **characterised in that** transmitting/receiving device (4) has a rectifier path in which a rectifying element for provision of a rectified voltage is provided.

24. Transponder according to at least one of the preceding claims, **characterised in that** the transponder (3) is a component of a high-frequency identification communications system (1), particularly for an RFID system.

**Revendications**

1. Transpondeur à rétrodiffusion (3) pour un système de communication HF (1) à réflexion modulée,

   a) comprenant une antenne (6) pour la réception de signaux porteurs à haute fréquence (13), l'antenne (6) présentant des propriétés de réflexion,
   b) le transpondeur peut être utilisé dans un premier mode de fonctionnement pour la communication de données entre station de base et transpondeur,
   c) le transpondeur présentant un deuxième mode de fonctionnement pour la transmission de paramètres spécifiques au transpondeur,
   d) le deuxième mode de fonctionnement étant un mode test de fonctionnement,
   e) un dispositif de commande (20-22) étant prévu pour la fourniture de paramètres spécifiques au transpondeur (P1, P2) qui renseignent sur la qualité ou l'efficacité ou la capacité de fonctionnement du transpondeur,

f) **caractérisé en ce que** :

g) l'on prévoit un modulateur (23) pouvant être commandé par le dispositif de commande (20-22), conçu pour modifier les propriétés réflectives de l'antenne (6) conformément à au moins un paramètre (P1, P2) spécifique au transpondeur.

2. Transpondeur selon la revendication 1, **caractérisé en ce que** dans le deuxième mode de fonctionnement, le dispositif de commande (20-22) commande le modulateur (23) de telle manière que les propriétés réflectives sont modifiées conformément à un signal de commande (F1, F2, S3) déduit d'au moins un paramètre (P1, P2) spécifique au transpondeur.

3. Transpondeur selon l'une au moins des revendications précédentes, **caractérisé en ce que** le dispositif de commande (20-22) présente au moins un oscillateur (25) à commande de fréquence, un signal de tension (S1, S2, VDD, V0), qui caractérise un paramètre (P1, P2) spécifique au transpondeur, pouvant être acheminé vers l'oscillateur (25) comme grandeur de commande, et l'oscillateur (25) générant à partir de lui, du côté sortie, le signal de commande (F1, F2, S3).

4. Transpondeur selon la revendication 3, **caractérisé en ce que** l'oscillateur (25) est un oscillateur (25) à commande par courant ou un oscillateur (25) à commande par tension.

5. Transpondeur selon l'une au moins des revendications 3 ou 4, **caractérisé en ce que** comme signal de tension (S1, S2, VDD, V0) pour caractériser des paramètres (P1, P2) spécifiques au transpondeur, l'on prévoit une tension d'alimentation (VDD) et/ou une tension de barrière de potentiel et/ou une tension de sortie RSSI extraite(s) d'un champ magnétique.

6. Transpondeur selon l'une au moins des revendications précédentes, **caractérisé en ce que** l'on prévoit un dispositif d'approvisionnement en énergie (24) pour l'approvisionnement en énergie du transpondeur (3), conçu pour extraire une tension d'alimentation (VDD) d'un champ magnétique entourant le transpondeur (3), le dispositif de commande (20-22) acquérant le signal de commande (F1, F2, S3) à partir de la tension d'alimentation (VDD) extraite.

7. Transpondeur selon la revendication 6, **caractérisé en ce que** le dispositif d'approvisionnement en énergie (24) génère une tension d'alimentation (VDD) stabilisée et/ou unidirectionnelle.

8. Transpondeur selon l'une au moins des revendications précédentes, **caractérisé en ce qu'**entre une sortie de l'oscillateur (25) et une entrée de commande du modulateur (23) monté en aval de celui-ci, on prévoit un dispositif diviseur (26) comprenant un premier nombre d'étapes de division, qui divise une fréquence (F1) d'oscillateur générée par l'oscillateur (25) pour fournir un signal de commande (F2) divisé.

9. Transpondeur selon la revendication 8, **caractérisé en ce que** le dispositif diviseur (26) présente un dispositif de réinitialisation (27) qui permet de remettre à zéro le dispositif diviseur (26) en cas de dépassement d'un niveau de signal.

10. Transpondeur selon la revendication 9, **caractérisé en ce que** le dispositif de réinitialisation (27) présente une entrée de commande pour le couplage d'un signal de commande POR (POR), qui permet de régler un seuil pour la réinitialisation du dispositif diviseur (26).

11. Transpondeur selon l'une au moins des revendications précédentes, **caractérisé en ce que** le modulateur (23) est un modulateur (23) à rétrodiffusion ou un modulateur de charge (23) et présente une charge couplée à l'antenne (6) et pouvant être réglée de manière variable, la section de rétrodiffusion de l'antenne (6) pouvant être modifiée par modification de la charge.

12. Transpondeur selon la revendication 11, **caractérisé en ce que** le modulateur (23) présente une charge à capacité variable, l'angle de phase d'un signal (7) rétrodiffusé par l'antenne (6) étant modifié par la modification de la capacité de la charge capacitive.

13. Transpondeur selon la revendication 12, **caractérisé en ce que** la charge à capacité variable est un varactor commandable, plus particulièrement un varactor CMOS.

14. Transpondeur selon l'une au moins des revendications précédentes, **caractérisé en ce que** la charge capacitive est une composante micromécanique, dans la capacité change en fonction de la modification de la température ambiante et/ou de la pression ambiante du transpondeur (3).

15. Transpondeur selon l'une au moins des revendications précédentes, **caractérisé en ce que** l'on prévoit un dispositif capteur (20, 21) couplé au dispositif de commande (22) ou faisant partie du dispositif de commande (20-22) et qui achemine au dispositif de commande (22) les données de capteur (P1, P2) mesurées.

**16.** Transpondeur selon la revendication 15, **caractérisé en ce que** le dispositif capteur (20, 21) est intégré avec un dispositif émetteur/récepteur (5) du transpondeur (3) dans une unique puce semiconductrice.

**17.** Transpondeur selon l'une au moins des revendications 15 ou 16, **caractérisé en ce que** le dispositif capteur (20, 21) présente au moins un capteur (20, 21) à action capacitive et/ou ohmique.

**18.** Transpondeur selon l'une au moins des revendications 15 à 17, **caractérisé en ce que** le dispositif capteur (20, 21) présente au moins un capteur (20, 21) agissant comme source de courant et/ou source de tension.

**19.** Transpondeur selon l'une au moins des revendications précédentes, **caractérisé en ce que** l'on prévoit un dispositif de commande supplémentaire (4) qui commande le dispositif de commande (20-22) et qui règle un signal de modulation (F1, F2) généré par le modulateur (23) de telle façon que le transpondeur (3) communique avec une station de base (2).

**20.** Transpondeur selon la revendication 19, **caractérisé en ce que** le dispositif de commande (20-22) fait partie du dispositif de commande supplémentaire (4).

**21.** Transpondeur selon l'une au moins des revendications précédentes, **caractérisé en ce que** l'on prévoit un dispositif émetteur/récepteur (4) qui représente la jonction externe du transpondeur (3), qui présente l'antenne (6) conçue comme une antenne émettrice/réceptrice (6) et le modulateur (23), l'antenne émettrice/réceptrice (6) étant prévue pour la réception de signaux porteurs (13) de haute fréquence provenant d'une station de base (2) et le renvoi de signaux de réponse (6).

**22.** Transpondeur selon la revendication 21, **caractérisé en ce que** le dispositif émetteur/récepteur (4) présente un circuit RSSI pour la fourniture d'une tension RSSI.

**23.** Transpondeur selon l'une au moins des revendications 21 ou 22, **caractérisé en ce que** le dispositif émetteur/récepteur (4) présente une branche de redresseur, dans laquelle on prévoit un élément redresseur pour la fourniture d'une tension redressée.

**24.** Transpondeur selon l'une au moins des revendications précédentes, **caractérisé en ce que** le transpondeur (3) fait partie d'un système de communication à identification HF (1), plus particulièrement pour un système RFID.

FIG.1

FIG.2

FIG.3

FIG.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 750200 B1

- US 6412086 B

**In der Beschreibung aufgeführte Nicht-Patentliteratur**

- **Klaus Finkenzeller.** RFID-Handbuch. Hanser Verlag, 2002